# EUROPÄISCHE PATENTANMELDUNG

(11) **EP 4 592 661 A1**
(43) Veröffentlichungstag der Anmeldung: **30.07.2025**
(21) Anmeldenummer: 25154661.0
(22) Anmeldetag: 29.01.2025
(51) Int. Cl.: G01M 9/06, G01M 9/08

(54) **WINDKANALTESTVORRICHTUNG ZUR ERMITTLUNG VON DYNAMISCHEN BEIWERTEN AN EINEM WINDKANALMODELL**

(30) Priorität: 29.01.2024 DE 102024102388
(71) Anmelder: Deutsches Zentrum für Luft- und Raumfahrt e.V., 53227 Bonn (DE)
(72) Erfinder: Gawehn, Thomas, 51147 Köln (DE); Zhai, Junnai, 51147 Köln (DE); Miketta, Markus, 51147 Köln (DE)
(74) Vertreter: dompatent von Kreisler Selting Werner - Partnerschaft von Patent- und Rechtsanwälten mbB

(57) **Zusammenfassung**

Windkanaltestvorrichtung (1) zur Ermittlung von dynamischen Beiwerten an einem Windkanalmodell,
mit einem Windkanalmodell (3) und mit einer Auslösevorrichtung (5),
wobei das Windkanalmodell (3) auf einer von einer Anströmseite (3a) abgewandten Seite eine Anschlussaussparung (7) aufweist, in der eine Anschlussvorrichtung (9) für die Auslösevorrichtung (5) angeordnet ist, wobei die Auslösevorrichtung (5) eine Federeinrichtung (11) aufweist, über die die Auslösevorrichtung (5) mit der Anschlussvorrichtung (9) verbunden ist,
wobei das Windkanalmodell (3) einen ersten und einen zweiten Auslösevorsprung (15, 17) aufweist, die in der Anschlussaussparung (7) angeordnet sind, wobei die Auslösevorrichtung (5) mit einer Auslenkeinrichtung (13) an dem ersten und dem zweiten Auslösevorsprung (15,17) angreift,
wobei die Auslenkeinrichtung (13) relativ zu dem Windkanalmodell (3) aus einer Halteposition, in der das Windkanalmodell (3) mittels des ersten und des zweiten Auslösevorsprungs (15, 17) von der Auslenkeinrichtung (13) in einer Grundposition des Windkanalmodells (3) gehalten wird, in eine Auslöseposition bewegbar ist, wobei bei der Bewegung der Auslenkeinrichtung (13) eine erste Auslenkkontur (35) der Auslenkeinrichtung (13) gegen den ersten Auslösevorsprung (15) drückt und das Windkanalmodell (3) in eine Auslenkrichtung und entgegen einer Federkraft der Federeinrichtung (11) in eine Auslenkposition des Windkanalmodells (3) bewegt, wobei die erste Auslenkkontur (35) eine Stufe bildet und wobei in der Auslenkposition des Windkanalmodells (3) der erste Auslösevorsprung (15) auf der Stufe angeordnet ist,
wobei eine Bewegung der Auslenkeinrichtung (13) relativ zu dem Windkanalmodell (3) über die Auslöseposition hinaus, der erste Auslösevorsprung (15) sich über die Stufe bewegt und das Windkanalmodell (3) zum Schwingen um die Federeinrichtung (11) freigibt.

## Beschreibung

Die vorliegende Erfindung betrifft eine Windkanaltestvorrichtung zur Ermittlung von dynamischen Beiwerten an einem Windkanalmodell.

Für die aerodynamische Charakterisierung von Luft- und Raumfahrzeugen werden experimentelle Untersuchungen in Windkanälen durchgeführt und zunächst statische und später dynamische Beiwerte möglichst für den gesamten Flugbereich bestimmt. Die statischen Beiwerte sind dimensionslose Kräfte und Momente, die auf das Fahrzeug aufgrund der Umströmung im Flug einwirken. Die dynamischen Beiwerte hingegen beschreiben die Reaktion des Fahrzeugs auf eine auftretende Störung, z. B. durch eine Windböe.

Häufig werden für die Untersuchungen an Luft- und Raumfahrzeugen Messsysteme eingesetzt, die in die Windkanalmodelle eingebaut werden und die Verbindung zwischen Modell und Halterung bilden. Für die Ermittlung statischer Beiwerte gibt es interne Kraftmesswaagen, die in Windkanalmodelle eingesetzt werden können.

Zur experimentellen Ermittlung dynamischer Beiwerte gibt es unterschiedliche Messmethoden, u. a. die Methode der freien Oszillation/Schwingung. Üblicherweise wird dafür eine Rotationsfeder mit nur einem einzigen Freiheitsgrad der Modellbewegung (Rotation um eine vorgegebene Achse) eingesetzt. Je nach Anwendungsfall kommen unterschiedliche Arten von Federn zum Einsatz.

Dynamische Beiwerte können nicht auf einen anderen Bezugspunkt umgerechnet, sondern müssen aus einer Schwingung um den gewünschten Bezugspunkt (üblicherweise den Schwerpunkt des Fahrzeugs) ermittelt werden. Deshalb wird die Feder so im Modell positioniert, dass ihre Rotationsachse durch den Bezugspunkt verläuft. Liegt der Schwerpunkt des gesamten schwingenden Systems auf der Rotationsachse, können Gewichtseinflüsse bei der dynamischen Messung vernachlässigt werden.

Die vorstehend beschriebenen Systeme gehören zum allgemeinen Kenntnisstand des Anmelders, beziehen sich jedoch nicht notwendigerweise auf einen vorveröffentlichten Stand der Technik.

Bei der zuvor beschriebenen dynamischen Messung werden Individuallösungen für jedes Windkanalmodell erstellt. Häufig müssen für die Ermittlung statischer und dynamischer Beiwerte oder bei der Ermittlung dynamischer Beiwerte um unterschiedliche Rotationsachsen unterschiedliche Windkanalmodelle verwendet werden, wodurch die Vergleichbarkeit von Messergebnissen möglicherweise beeinflusst wird.

Es ist daher die Aufgabe der vorliegenden Erfindung, eine verbesserte Windkanaltestvorrichtung zur Ermittlung von dynamischen Beiwerten an einem Windkanalmodell zu schaffen, die die Ermittlung dynamischer Beiwerte vereinfacht.

Die Erfindung ist definiert durch die Merkmale des Anspruchs 1.

Die erfindungsgemäße Windkanaltestvorrichtung zur Ermittlung von dynamischen Beiwerten an einem Windkanalmodell weist ein Windkanalmodell und eine Auslösevorrichtung auf. Das Windkanalmodell weist auf einer von einer Anströmseite abgewandten Seite eine Anschlussaussparung auf, in der eine Anschlussvorrichtung für die Auslösevorrichtung angeordnet ist, wobei die Auslösevorrichtung eine Federeinrichtung aufweist, über die die Auslösevorrichtung mit der Anschlussvorrichtung verbunden ist. Das Windkanalmodell weist ferner einen ersten und einen zweiten Auslösevorsprung auf, die in der Anschlussaussparung angeordnet sind, wobei die Auslösevorrichtung mit einer Auslenkeinrichtung an dem ersten und dem zweiten Auslösevorsprung angreift und wobei die Auslenkeinrichtung relativ zu dem Windkanalmodell aus einer Halteposition, in der das Windkanalmodell mittels des ersten und des zweiten Auslösevorsprungs von der Auslenkeinrichtung in einer Grundposition des Windkanalmodells gehalten wird, in eine Auslöseposition bewegbar ist, wobei bei der Bewegung der Auslenkeinrichtung eine erste Auslenckontur gegen den ersten Auslösevorsprung drückt und das Windkanalmodell in eine Auslenkrichtung und entgegen einer Federkraft der Federeinrichtung um eine Rotationsachse in eine Auslenkposition des Windkanalmodells verschwenkt. Die erste Auslenkkontur bildet eine Stufe und in der Auslenkposition des Windkanalmodells ist der erste Auslösevorsprung auf der Stufe angeordnet, wobei durch eine Bewegung der Auslenkeinrichtung relativ zu dem Windkanalmodell über die Auslöseposition hinaus, der erste Auslösevorsprung sich über die Stufe bewegt und das Windkanalmodell zum Schwingen um die Federeinrichtung freigibt.

Die erfindungsgemäße Windkanaltestvorrichtung zur Ermittlung von dynamischen Beiwerten ermöglicht in vorteilhafter Weise, dass das Windkanalmodell in eine Schwingung um die Federeinrichtung freigegeben wird, sodass die dynamischen Beiwerte bestimmbar sind. Durch das Vorsehen einer Anschlussaussparung, in der eine Anschlussvorrichtung für die Auslösevorrichtung angeordnet ist, kann das Windkanalmodell in vorteilhafter Weise flexibel eingesetzt werden, da an der Anschlussvorrichtung unterschiedlich konfigurierte Auslösevorrichtungen angeschlossen werden können oder auch eine Kraftmesswaage zur Bestimmung statischer Beiwerte. Hierfür kann insbesondere vorgesehen sein, dass die Anschlussaussparung an die Abmessungen einer Kraftmesswage zur Bestimmung statischer Beiwerte angepasst ist.

Dadurch kann die erfindungsgemäße Windkanaltestvorrichtung eingesetzt werden, um mit einem Windkanalmodell unterschiedliche Beiwerte zu bestimmen.

Die erfindungsgemäße Auslenkeinrichtung ermöglicht darüber hinaus, dass die Auslösung der dynamischen Bewegung des Windkanalmodells um die Federeinrichtung auf einfache Art und Weise erfolgt, indem die Auslenkeinrichtung relativ zu dem Windkanalmodell bewegt wird.

Die Anschlussaussparung kann insbesondere derart dimensioniert sein, dass sie zumindest in einer Auslenkrichtung einen vorgegebenen Abstand zu der Auslösevorrichtung bildet, um die Auslenkung und das anschließende Schwingen weitestgehend frei zu ermöglichen. Der erste und der zweite Auslösevorsprung können Endlager für die Schwingung des Windkanalmodells bilden, sodass diese die maximale Auslenkung während des Schwingens begrenzen, um beispielsweise die Federeinrichtung vor einer Überlastung zu schützen.

Der erste und der zweite Auslösevorsprung können beispielsweise als Stifte ausgebildet sein, die in das Windkanalmodell eingeschraubt sind. Beispielsweise können der erste und der zweite Auslösevorsprung sich einander gegenüberliegend in der Anschlussaussparung angeordnet sein.

Vorzugsweise ist vorgesehen, dass die Auslösevorrichtung einen langgestreckten Hauptkörper aufweist, der sich in die Anschlussaussparung erstreckt und dessen erstes Ende mit der Federeinrichtung verbunden ist, wobei die Auslenkeinrichtung relativ zu dem langgestreckten Hauptkörper in axialer Richtung des langgestreckten Hauptkörpers bewegbar ist. Über den langgestreckten Hauptkörper lässt sich das Windkanalmodell in vorteilhafter Weise über die Federeinrichtung halten bzw. lagern. Dabei kann vorgesehen sein, dass die Federeinrichtung lösbar an dem langgestreckten Hauptkörper und/oder lösbar an der Anschlussvorrichtung befestigt ist. Dadurch lässt sich die erfindungsgemäße Windkanaltestvorrichtung in vorteilhafter Weise flexibel einsetzen, indem beispielsweise unterschiedliche Federeinrichtungen verwendbar sind.

Indem die Auslenkeinrichtung relativ zu dem langgestreckten Hauptkörper bewegbar ist, kann diese in vorteilhafter Weise die Auslösebewegung ausführen und das Windkanalmodell auslenken, wobei während der Auslösebewegung der langgestreckte Hauptkörper über die Federeinrichtung das Windkanalmodell lagert.

Vorzugsweise ist vorgesehen, dass der langgestreckte Hauptkörper als Hohlzylinder ausgebildet ist, wobei die Auslenkeinrichtung als ein ein- oder mehrteiliger Hülsenkörper ausgebildet ist, der vorzugsweise den langgestreckten Hauptkörper umgibt, und über eine durch den Hohlzylinder geführte Antriebsstange bewegbar ist.

Über die Antriebsstange lässt sich die Auslenkeinrichtung in vorteilhafter Weise antreiben, um die Auslenk- und Auslösebewegung auszuführen. Beispielsweise lässt sich die Antriebsstange in vorteilhafter Weise translatorisch antreiben, beispielsweise über einen Motor.

Grundsätzlich kann auch vorgesehen sein, dass beispielsweise ein Schrittmotor eine Spindel rotatorisch antreibt, die die Antriebsstange mittels einer Mutter translatorisch bewegt.

Vorzugsweise ist vorgesehen, dass der Hülsenkörper aus einer ersten und einer zweiten Hülse besteht, wobei die erste und die zweite Hülse relativ zueinander bewegbar sind, wobei die erste Hülse eine Rampenkontur mit einer ersten und einer zweiten Rampe, die sich in der axialen Richtung erstreckt, als Teil der ersten Auslenkkontur aufweist und die zweite Hülse einen Stufenvorsprung, der die Stufe bildet, als Teil der ersten Auslenkkontur aufweist, wobei die Rampenkontur eine an den Stufenvorsprung angepasste Erstreckung in die Auslenkrichtung aufweist und wobei die Rampenkontur und der Stufenvorsprung in einer Richtung quer zu der axialen Richtung nebeneinander angeordnet sind, wobei bei der Bewegung der Auslenkeinrichtung aus der Halteposition in die Auslöseposition die erste Rampe den ersten Auslösevorsprung auf den Stufenvorsprung führt.

Durch die Ausbildung des Hülsenkörpers aus einer ersten und einer zweiten Hülse lässt sich der erste Auslösevorsprung in vorteilhafter Weise zum Hervorrufen der Auslenkbewegung führen.

In der Auslenkposition des Windkanalmodells kann der zweite Auslösevorsprung von der Auslenkeinrichtung beabstandet sein. Dadurch wird verhindert, dass der zweite Auslösevorsprung das Schwingen des Windkanalmodells nach Freigabe durch den ersten Auslösevorsprung beeinträchtigt.

Es kann vorgesehen sein, dass die Auslenkrichtung die vertikale Richtung ist und die Rampenkontur und der Stufenvorsprung in der Richtung quer zu der axialen Richtung einen Abstand zueinander aufweisen, der geringer ist als eine Breite des ersten Auslösevorsprungs in dieser Richtung, wobei die erste und die zweite Hülse in der Halteposition der Auslenkeinrichtung in einer ersten Position zueinander angeordnet sind, in der der Stufenvorsprung in der Richtung quer zu der axialen Richtung die zweite Rampe zumindest teilweise überdeckt und wobei die zweite Hülse in Richtung zu der Federeinrichtung relativ zu der ersten Hülse in eine zweite Position verschiebbar ist, in der der Stufenvorsprung in der Richtung quer zu der axialen Richtung die zweite Rampe nicht überdeckt.

Bei der translatorischen Bewegung der Auslenkeinrichtung drückt zunächst die Rampenkontur mit der ersten Rampe gegen den ersten Auslösevorsprung und das Windkanalmodell wird ausgelenkt. Bei der weiteren Bewegung der Auslenkeinrichtung in axialer Richtung erreicht der erste Auslösevorsprung den Stufenvorsprung, wobei aufgrund der Anordnung des Stufenvorsprungs und der Rampenkontur mit einem Abstand, der geringer ist als die Breite des ersten Auslösevorsprungs in dieser Richtung, der erste Auslösevorsprung auf den Stufenvorsprung gelangt. Dadurch, dass in der ersten Position der Stufenvorsprung in der Richtung quer zu der axialen Richtung die zweite Rampe zumindest teilweise überdeckt, ist zwischen dem Stufenvorsprung und der zweiten Rampe die Stufe gebildet, sodass ein Freiraum hinter der Stufe vorliegt, durch den ein Schwingen des Windkanalmodells ermöglicht wird, ohne dass der erste Auslösevorsprung dieses in unerwünschter Weise durch eine Kollision mit der zweiten Rampe verhindert.

Beim relativen Verschieben der zweiten Hülse in Richtung zu der Federeinrichtung relativ zu der ersten Hülse überdeckt der Stufenvorsprung die zweite Rampe in der Richtung quer zu der axialen Richtung nicht mehr, sodass bei einem Zurückziehen der Auslenkeinrichtung der erste Auslenkvorsprung über die zweite Rampe geführt werden kann, um auf den Stufenvorsprung und zurück in die Ausgangsposition zu gelangen. Dadurch kann der Auslenk- und Auslösevorgang in vorteilhafter Weise erneut gestartet werden.

In einem Ausführungsbeispiel der Erfindung kann vorgesehen sein, dass die Auslenkvorrichtung eine Führungskontur aufweist, die bei der Bewegung der Auslenkeinrichtung in Richtung zu der Auslöseposition den zweiten Auslösevorsprung führt, wobei die Führungskontur in der Auslöseposition einen Freigabebereich bildet, der einen vorgegebenen Abstand zu dem zweiten Auslösevorsprung aufweist. Es kann somit vorgesehen sein, dass der zweite Auslösevorsprung während der Auslenkbewegung eine Führungsfunktion wahrnimmt, um die Auslenkbewegung des Windkanalmodells zu führen, um sicherzustellen, dass keine ungewollte Bewegung des Windkanalmodells erfolgt, die die Federeinrichtung überlasten könnte. Beim Erreichen der Auslöseposition wird zwischen der Führungskontur und dem zweiten Auslösevorsprung ein Freigabebereich gebildet, sodass bei einer weiteren Bewegung der Auslenkeinrichtung, durch die der Schwingvorgang ausgelöst wird, ein ausreichender Spalt für die Ausführung der Schwingbewegung zwischen dem zweiten Auslösevorsprung und der Führungskontur verbleibt.

Bei dem Ausführungsbeispiel, bei dem die Auslenkrichtung die vertikale Richtung ist, kann eine Nickoszillationsmessung vorgenommen werden, da die Auslenkrichtung die Nickrichtung des Windkanalmodells ist.

Es kann auch vorgesehen sein, dass bei der Bewegung der Auslenkeinrichtung eine zweite Auslenkkontur der Auslenkeinrichtung gegen den zweiten Auslösevorsprung drückt und das Windkanalmodell in die Auslenkrichtung bewegt, wobei die zweite Auslenkkontur eine Stufe bildet und wobei in der Auslenkposition des Windkanalmodells der zweite Auslösevorsprung auf der Stufe der zweiten Auslenkkontur angeordnet ist, wobei durch eine Bewegung der Auslenkeinrichtung relativ zu dem Windkanalmodell über die Auslöseposition hinaus, der zweite Auslösevorsprung sich über die Stufe der zweiten Auslenkkontur bewegt und das Windkanalmodell zum Schwingen um die Federeinrichtung freigibt.

Somit können der erste und der zweite Auslösevorsprung gleichzeitig entsprechend gegen die erste und zweite Auslenkkontur drücken und gemeinsam das Windkanalmodell zum Schwingen freigeben.

Dabei kann vorgesehen sein, dass die erste Hülse eine weitere Rampenkontur mit einer ersten und einer zweiten Rampe, die sich in der axialen Richtung erstreckt, als Teil der zweiten Auslenkkontur aufweist und die zweite Hülse einen weiteren Stufenvorsprung, der die Stufe der zweiten Auslenkkontur bildet, als Teil der zweiten Auslenkkontur aufweist, wobei die weitere Rampenkontur eine an den weiteren Stufenvorsprung angepasste Erstreckung in der Auslenkrichtung aufweist und wobei die weitere Rampenkontur und der weitere Stufenvorsprung in einer Richtung quer zu der axialen Richtung nebeneinander angeordnet sind, wobei bei der Bewegung der Auslenkeinrichtung aus der Halteposition in die Auslöseposition die erste Rampe der weiteren Rampenkontur den zweiten Auslösevorsprung auf den weiteren Stufenvorsprung führt. Die weitere Rampenkontur kann somit den gleichen Aufbau wie die Rampenkontur aufweisen.

Dabei kann vorgesehen sein, dass die Auslenkrichtung die Umfangsrichtung oder die tangentiale Richtung ist, wobei die erste und die zweite Hülse in der Halteposition der Auslenkeinrichtung in einer ersten Position zueinander angeordnet sind, in der der Stufenvorsprung in Umfangsrichtung die zweite Rampe zumindest teilweise überdeckt und wobei die zweite Hülse in Richtung zu der Federeinrichtung relativ zu der ersten Hülse in eine zweite Position verschiebbar ist, in der der Stufenvorsprung in Umfangsrichtung die zweite Rampe nicht überdeckt. Dabei kann vorgesehen sein, dass wenn die erste und die zweite Hülse in der Halteposition der Auslenkeinrichtung in einer ersten Position zueinander angeordnet sind, der weitere Stufenvorsprung der zweiten Auslenkkontur in Umfangsrichtung die zweite Rampe der weiteren Rampenkontur zumindest teilweise überdeckt und wenn die zweite Hülse in Richtung zu der Federeinrichtung relativ zu der ersten Hülse in eine zweite Position verschoben ist, der weitere Stufenvorsprung der zweiten Auslenckontur in Umfangsrichtung die zweite Rampe der weiteren Rampenkontur nicht überdeckt.

Bei der Variante, bei der die Auslenkrichtung die Umfangsrichtung ist, kann eine Rolloszillationsmessung vorgenommen werden. Dabei ist die Auslenkeinrichtung derart ausgestaltet, dass die Rampenkontur in Umfangsrichtung in Richtung zu dem ersten Auslösevorsprung angeordnet ist, wobei der Stufenvorsprung in Umfangsrichtung neben der Rampenkontur liegt und sich in Richtung zu dem ersten Auslösevorsprung erstreckt. Bei der Bewegung der Auslenkeinrichtung in axialer Richtung gleitet der erste Auslösevorsprung über die erste Rampe der Rampenkontur und drückt das Windkanalmodell somit in Umfangsrichtung, wobei vorzugsweise die zweite Auslenkkontur für den zweiten Auslösevorsprung angepasst ist, um die Bewegung zu unterstützen. Dies kann beispielsweise erfolgen, indem die zweite Auslenkkontur gespiegelt zu der ersten Auslenkkontur angeordnet ist (gespiegelt an der horizontalen und der vertikalen Ebene). Der erste Auslösevorsprung kann grundsätzlich beispielsweise oberhalb der Auslenkeinrichtung angeordnet sein, wohingegen der zweite Auslösevorsprung grundsätzlich unterhalb der Auslenkeinrichtung angeordnet sein kann. Dadurch besteht dann die Möglichkeit, dass der erste Auslösevorsprung von der Auslenkeinrichtung nach rechts gedrückt wird, wohingegen der zweite Auslösevorsprung von der Auslenkeinrichtung nach links gedrückt wird (oder umgekehrt), wodurch in Umfangsrichtung ausgelenkt wird, um eine Rollbewegung zu simulieren. In vergleichbarer Weise wie bei dem zuvor beschriebenen Ausführungsmodell überdeckt der Stufenvorsprung zunächst die zweite Rampe in Umfangsrichtung und somit wird ein Freiraum für den Schwingvorgang gebildet. Durch ein relatives Verschieben der zweiten Hülse relativ zu der ersten Hülse in die zweite Position überdeckt der Stufenvorsprung die zweite Rampe nicht weiter, sodass bei einem Rückführen der Auslenkeinrichtung der erste Auslösevorsprung entlang der zweiten Rampe gleitet, um auf den Stufenvorsprung zu gelangen.

Grundsätzlich kann die Auslenkrichtung auch eine tangentiale Richtung sein, um eine Gierbewegung zu simulieren. Für die Gierbewegung ist es notwendig, dass die zweite Auslenkkontur für den zweiten Auslösevorsprung angepasst ist (ebenfalls gespiegelt, jedoch nur an der horizontalen Ebene). Der erste Auslösevorsprung kann dabei auch grundsätzlich beispielsweise oberhalb der Auslenkeinrichtung angeordnet sein, wohingegen der zweite Auslösevorsprung grundsätzlich unterhalb der Auslenkeinrichtung angeordnet sein kann. Wenn der erste und der zweite Auslösevorsprung in die gleiche Richtung, beispielsweise beide nach rechts oder beide nach links gedrückt werden, erfolgt eine Auslenkung in tangentialer Richtung, was die Gierbewegung simuliert.

Die erfindungsgemäße Windkanaltestvorrichtung ermöglicht somit Auslenkungen in verschiedene Richtungen, um entsprechende Oszillationsmessungen vorzunehmen. Sowohl die Nickoszillationsmessung als auch die Rolloszillationsmessung als auch die Gieroszillationsmessung können durch einen translatorischen Antrieb der Antriebsstange betätigt werden.

Für einen Wechsel zwischen den unterschiedlichen Oszillationsmessungen ist es lediglich notwendig, einen Austausch der Auslenkeinrichtung und ggf. der Federeinrichtung vorzunehmen. Somit ist die erfindungsgemäße Windkanaltestvorrichtung in besonders vorteilhafter Weise verwendbar. Insbesondere ist der Vorteil gegeben, dass sowohl für die Nickoszillationsmessung als auch die Rolloszillationsmessung oder die Gieroszillationsmessung dasselbe Windkanalmodell verwendbar ist, sodass in vorteilhafter Weise vergleichbare Messungen erfolgen können.

Das Windkanalmodell kann derart ausgebildet sein, dass der Schwerpunkt des Windkanalmodells auf der Rotationsachse der Federeinrichtung liegt. Durch die geometrische Ausgestaltung der Windkanaltestvorrichtung und des Windkanalmodells kann ermöglicht werden, dass bei den unterschiedlichen Oszillationsmessungen auch bei Verwendung unterschiedlicher Federeinrichtungen der Schwerpunkt stets in der Rotationsachse der Federeinrichtung liegt. Bei einem Windkanalmodell kann beispielsweise vorgesehen sein, dass der Schwerpunkt mittig in der Anschlussaussparung in einem vorgegebenen Abstand zu der Anschlussvorrichtung liegt. Durch eine entsprechend angepasste Federeinrichtungen kann sichergestellt werden, dass der Schwerpunkt und die Federeinrichtung die gewünschte Lage zueinander aufweisen. Dies hat den Vorteil, dass lediglich die Federeinrichtungen angepasst sein müssen und keine Veränderung am Windkanalmodell vorgenommen werden muss. Ferner können, wie zuvor beschrieben wurde, an dem gleichen Windkanalmodell Messungen für die statische Beiwertbestimmung erfolgen.

Vorzugsweise ist vorgesehen, dass bei der Rückführung der Auslenkeinrichtung in die Halteposition der erste Auslösevorsprung gegen den Stufenvorsprung drückt und die zweite Hülse aus der ersten Position in die zweite Position schiebt, wobei die zweite Rampe freigegeben wird und die zweite Rampe den ersten Auslösevorsprung auf den Stufenvorsprung führt. Entsprechend kann vorgesehen sein, dass bei der Rückführung der Auslenkeinrichtung in die Halteposition der zweite Auslösevorsprung gegen den weiteren Stufenvorsprung drückt und unterstützend die zweite Hülse aus der ersten Position in die zweite Position schiebt, wobei die zweite Rampe der weiteren Rampenkontur freigegeben wird und die zweite Rampe der weiteren Rampenkontur den zweiten Auslösevorsprung auf den Stufenvorsprung führt.

Zwischen der ersten und der zweiten Hülse kann eine Zwischenfeder angeordnet sein, wobei die Verschiebung der zweiten Hülse relativ zu der ersten Hülse aus der ersten Position in die zweite Position entgegen einer Federkraft der Zwischenfeder erfolgt. Beim Zurückführen der Auslenkeinrichtung nach einer Schwingbewegung des Windkanalmodells stößt der Stufenvorsprung zunächst gegen den ersten Auslösevorsprung bzw. in einigen Ausführungsbeispielen gleichzeitig der weitere Stufenvorsprung gegen den zweiten Auslösevorsprung. Dadurch wird die zweite Hülse gegenüber der ersten Hülse relativ verschoben, wodurch jeweils die zweite Rampe freigegeben wird und der erste Auslösevorsprung entlang der zweiten Rampe der Rampenkontur bzw. der zweite Auslösevorsprung entlang der zweiten Rampe der weiteren Rampenkontur gleiten kann. Sobald die zweite Hülse ausreichend weit gegenüber der ersten Hülse verschoben ist, kann der erste Auslösevorsprung auf den Stufenvorsprung bzw. der zweite Auslösevorsprung auf den weiteren Stufenvorsprung gleiten. Die zwischenzeitlich vorgespannte Zwischenfeder zieht nun die zweite Hülse zurück in die erste Position, wobei der erste Auslösevorsprung auf dem Stufenvorsprung bzw. der zweite Auslösevorsprung auf dem weiteren Stufenvorsprung verbleibt. Bei einer weiteren Bewegung der Auslenkeinrichtung zurück in die Halteposition gleitet der erste Auslösevorsprung über die erste Rampe der Rampenkontur bzw. der zweite Auslösevorsprung über die erste Rampe der weiteren Rampenkontur in die Ausgangsposition. Dadurch lässt sich ein Zurückführen der Auslenkeinrichtung in die Halteposition in besonders vorteilhafter Weise ermöglichen.

Die Federeinrichtung kann beispielsweise eine Rotationsfeder mit vorzugsweise gekreuzten Blattfederelementen sein, auf denen Dehnmessstreifen angeordnet sind. Über die Dehnmessstreifen können Frequenz und Amplitude der Schwingungen über die Signale der Dehnmessstreifen aufgezeichnet werden. Hieraus können dynamische Beiwerte der Modellbewegung berechnet werden.

Somit lassen sich durch die erfindungsgemäße Windkanaltestvorrichtung in vorteilhafter Weise Oszillationsmessungen in Nick-, Gier- und Rollrichtung vornehmen.

Die erfindungsgemäße Windkanaltestvorrichtung hat darüber hinaus den Vorteil, dass lediglich die Auslenkeinrichtung und ggf. die Federeinrichtung ausgetauscht, jedoch an dem Windkanalmodell keine Änderungen vorgenommen werden müssen, da die Auslenkeinrichtungen sämtlicher Varianten mit dem ersten und zweiten Auslösevorsprung des Windkanalmodells zusammenwirken. Auch für die Durchführung von statischen Kraftmessungen mittels interner Waagen sind keine Änderungen am Windkanalmodell erforderlich.

Im Folgenden wird unter Bezugnahme auf die nachfolgenden Figuren die Erfindung näher erläutert. Es zeigen:
- Fig. 1: eine schematische Perspektivdarstellung der erfindungsgemäßen Windkanaltestvorrichtung mit Windkanalmodell,
- Fig. 2: eine schematische Schnittdarstellung eines ersten Ausführungsbeispiels der erfindungsgemäßen Windkanaltestvorrichtung zur Ausführung einer Nickbewegung,
- Fign. 3A-K: schematische Detaildarstellungen der Auslenkeinrichtung des Ausführungsbeispiels der Fig. 2 zur Verdeutlichung der Funktion der Windkanaltestvorrichtung,
- Fig. 4a,b: schematische Schnittdarstellungen eines zweiten Ausführungsbeispiels der erfindungsgemäßen Windkanaltestvorrichtung zur Ausführung einer Rollbewegung und
- Fign. 5A-I: schematische Detaildarstellungen der Auslenkeinrichtung gemäß Fig. 4a.

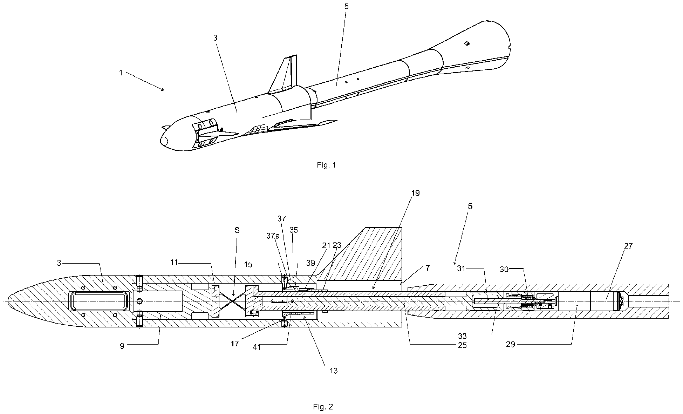

In Fig. 1 ist eine schematische Perspektivdarstellung der erfindungsgemäßen Windkanaltestvorrichtung 1 gezeigt. Die Windkanaltestvorrichtung 1 weist ein Windkanalmodell 3 und eine Auslösevorrichtung 5 auf, die das Windkanalmodell 3 hält.

Wie aus Fig. 2 ersichtlich ist, weist das Windkanalmodell 3 auf einer von der Anströmseite 3a abgewandten Seite eine Anschlussaussparung 7 auf, die als eine Art Sackloch ausgebildet ist. Eine Anschlussvorrichtung 9 des Windkanalmodells 3 verbindet das Windkanalmodell 3 mit der Auslösevorrichtung 5. Die Auslösevorrichtung 5 weist eine Federeinrichtung 11 auf, über die die Auslösevorrichtung 5 mit der Anschlussvorrichtung 9 verbunden ist.

Die Auslösevorrichtung 5 weist ferner eine Auslenkeinrichtung 13 auf. Im Bereich der Auslenkeinrichtung 13 sind an dem Windkanalmodell 3 ein erster Auslösevorsprung 15 und ein zweiter Auslösevorsprung 17 angeordnet, die von oben bzw. unten in die Anschlussaussparung 7 ragen.

Die Auslösevorrichtung 5 weist einen langgestreckten Hauptkörper 19 auf, der als Hohlzylinder ausgebildet ist. An dem der Federeinrichtung 11 zugewandten Ende des langgestreckten Hauptkörpers 19 ist die Auslenkeinrichtung 13 angeordnet und relativ zu dem langgestreckten Hauptkörper 19 bewegbar. Die Auslenkeinrichtung 13 besteht aus einer ersten Hülse 21 und einer zweiten Hülse 23.

Durch den langgestreckten Hauptkörper 19 erstreckt sich eine Antriebsstange 25, die die erste und zweite Hülse 21, 23 gegenüber dem langgestreckten Hauptkörper 19 linear bewegt. Die Antriebsstange 25 wird mittels eines Antriebsmotors 27, beispielsweise eines Schrittmotors, angetrieben, indem über ein Getriebe 29 eine Spindel 31, die über ein Lager 30 geführt ist, rotatorisch angetrieben wird. Über eine Mutter 33 wird die rotatorische Bewegung der Spindel 31 in die translatorische Bewegung der Antriebsstange 25 übersetzt.

Die Auslenkeinrichtung 13 weist eine erste Auslenkkontur 35 auf, die mit dem ersten Auslösevorsprung 15 zusammenwirkt. Die erste Auslenkkontur 35 wird durch eine Rampenkontur 37, die an der ersten Hülse 21 ausgebildet ist, und einen Stufenvorsprung 39, der an der zweiten Hülse 23 ausgebildet ist, gebildet.

Die Federeinrichtung 11 ist als Kreuzfeder ausgebildet und bildet eine Rotationsachse für die Nickbewegung des Windkanalmodells 3. Der Schwerpunkt S des Windkanalmodels 3 liegt in der Rotationsachse der Federeinrichtung 11.

Durch eine Bewegung der Auslenkeinrichtung 13 in axialer Richtung in Richtung zu der Federeinrichtung 11 gleitet der erste Auslösevorsprung 15 über eine erste Rampe 37a der Rampenkontur 37, wodurch das Windkanalmodell 3 gegenüber der Auslösevorrichtung 5 verschwenkt wird.

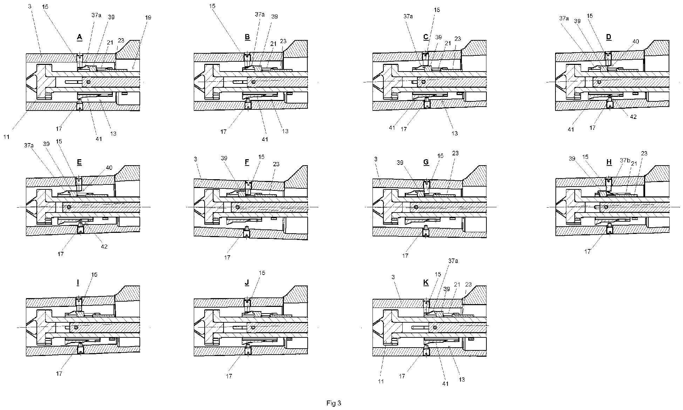

Die einzelnen Abschnitte der Bewegung sind am besten aus den Fign. 3A-K ersichtlich.

In Fig. 3A befindet sich die Auslenkeinrichtung 13 in einer Halteposition, in der das Windkanalmodell 3 mittels des ersten und des zweiten Auslösevorsprungs 15, 17 in einer Grundposition gehalten wird. Durch Verschieben der Auslenkeinrichtung 13 gegenüber dem langgestreckten Hauptkörper 19 drückt die erste Rampe 37a der Rampenkontur 37 gegen den ersten Auslösevorsprung 15 und lenkt das Windkanalmodell 3 aus. Der zweite Auslösevorsprung 17 liegt dabei an einer Führungskontur 41 an und führt die Auslenkbewegung des Windkanalmodells 3 (Fig. 3B). Die Rampenkontur 37 und die Führungskontur 41 sind an der ersten Hülse 21 angeordnet. Bei weiterer Verschiebung der Auslenkeinrichtung 13 in Richtung einer Auslöseposition gelangt der erste Auslösevorsprung 15 auf den Stufenvorsprung 39 der zweiten Hülse 23 (Fig. 3C).

Der Stufenvorsprung 39 der zweiten Hülse 23 ist in einer Richtung quer zu der axialen Richtung neben der Rampenkontur 37 angeordnet und überdeckt in der in Fig. 3A-E dargestellten ersten Position eine zweite Rampe 37b der Rampenkontur 37. In der zur Auslösung erfolgten Bewegungsrichtung der Auslenkeinrichtung 13 in axialer Richtung hinter dem Stufenvorsprung 39 schließt sich ein Freiraum 40 an. Erreicht die Auslenkeinrichtung 13 die Auslöseposition, die beispielsweise in Fig. 3D dargestellt ist, ist das Windkanalmodell 3 in seiner Auslenkposition. Der zweite Auslösevorsprung 17 liegt in dieser Position nicht mehr an der Führungskontur 41 an, da die Führungskontur 41 einen Freigabebereich 42 bildet. Wird nun die Auslenkeinrichtung 13 weiter verschoben, wird der erste Auslösevorsprung 15 über den Stufenvorsprung 39 geschoben, sodass sich der erste Auslösevorsprung 15 im Bereich des gebildeten Freiraums befindet. Das Windkanalmodell 3 kann nun weitestgehend frei oszillieren, wobei die Federeinrichtung 11 ein rückstellendes Moment auf das ausgelenkte Modell ausübt. Das Oszillieren ist in Fign. 3E und 3F dargestellt.

Zum Rückführen der Auslösevorrichtung 5 in die Ausgangsposition wird die Auslenkeinrichtung 13 angetrieben durch die Antriebsstange 25 in die entgegengesetzte Richtung gezogen. Dabei stößt der erste Auslösevorsprung 15 gegen den Stufenvorsprung 39 der zweiten Hülse 23 (Fig. 3G). Da die zweite Hülse 23 gegenüber der ersten Hülse 21 verschiebbar angeordnet ist, wird die zweite Hülse 23 gegenüber der ersten Hülse 21 durch den ersten Auslösevorsprung 15 verschoben. Dadurch wird die zweite Rampe 37b der Rampenkontur 37 freigegeben, sodass der erste Auslösevorsprung 15 von der zweiten Rampe 37b auf den Stufenvorsprung 39 geführt wird (Fig. 3H). Zwischen der ersten und der zweiten Hülse 21, 23 ist eine Zwischenfeder 43 angeordnet, sodass bei der relativen Bewegung der zweiten Hülse 23 gegenüber der ersten Hülse 21 die Zwischenfeder 43 gespannt wird. Sobald der erste Auslösevorsprung 15 auf dem Stufenvorsprung 39 angeordnet ist, kann die Zwischenfeder 43 die zweite Hülse 23 wieder zurück in die erste Position ziehen (Fig. 3I).

Der Auslösevorgang gemäß Fig. 3C bis 3I kann in einem Versuch mehrfach wiederholt werden.

Der erste Auslösevorsprung 15 wird schließlich weiter durch die erste Rampe 37a der Rampenkontur 37 in die Halteposition der Auslenkeinrichtung 13 gezogen, die in Fig. 3K dargestellt ist. Diese entspricht der Ausgangsposition aus Fig. 3A.

Bei der erfindungsgemäß vorgesehenen Auslenkeinrichtung 13 kann somit durch eine einfache lineare Bewegung sowohl die Auslösebewegung als auch die Rückführbewegung durchgeführt werden, wobei keine weitere Handlung für die Rückstellung notwendig ist.

Die Federeinrichtung 11 besteht aus gekreuzten Blattfedern, die nicht dargestellte Dehnungsmessstreifen aufweisen, worüber die Oszillation des Windkanalmodells 3 aufgenommen werden kann.

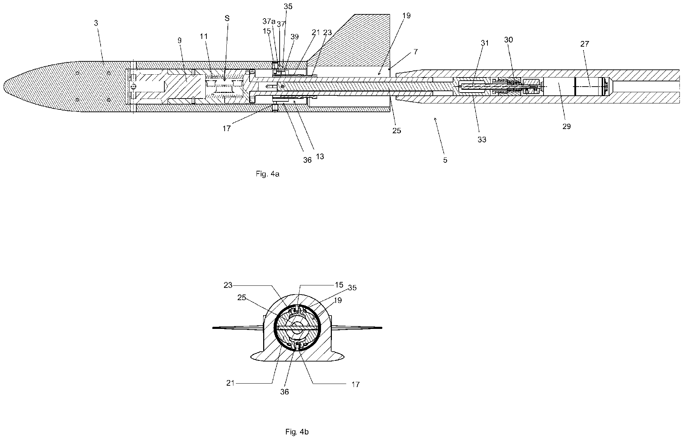

In Fign. 4a und 4b ist ein zweites Ausführungsbeispiel der erfindungsgemäßen Windkanaltestvorrichtung 1 schematisch gezeigt.

Das zweite Ausführungsbeispiel der erfindungsgemäßen Windkanaltestvorrichtung 1 entspricht im Wesentlichen dem ersten Ausführungsbeispiel, das in den Fign. 2 und 3 dargestellt ist, wobei im zweiten Ausführungsbeispiel der erfindungsgemäßen Windkanaltestvorrichtung 1 jedoch das Windkanalmodell 3 eine Rollbewegung ausführt. Die Auslenkrichtung ist somit die Umfangsrichtung.

Die Auslenkeinrichtung 13 wird auch bei diesem Ausführungsbeispiel durch eine lineare Bewegung der Antriebsstange 25 bewegt und ausgelöst.

Der wesentliche Unterschied zwischen dem ersten und zweiten Ausführungsbeispiel ist die Ausgestaltung der Federeinrichtung 11 sowie der ersten und zweiten Hülse 21, 23. Während bei dem in Fign. 2 und 3 dargestellten Ausführungsbeispiel die Auslenkeinrichtung 13 mit der ersten Auslenkkontur 35 von unten gegen den ersten Auslösevorsprung 15 drückt, wird bei dem zweiten Ausführungsbeispiel seitlich gegen den ersten Auslösevorsprung 15 gedrückt. Die erste Auslenkkontur 35, die ebenfalls aus einer Rampenkontur 37 an der ersten Hülse 21 und einem Stufenvorsprung 39 an der zweiten Hülse 23 besteht, ist dabei im Wesentlichen neben dem ersten Auslösevorsprung 15 angeordnet und in dessen Richtung ausgerichtet. Die Auslenkeinrichtung 13 weist ferner eine zweite Auslenkkontur 36 auf, die ebenfalls seitlich an dem zweiten Auslösevorsprung 17 anliegt. Durch die relative Bewegung der Auslenkeinrichtung 13 gegenüber dem langgestreckten Hauptkörper 19 wird der erste Auslösevorsprung 15 zur Seite gedrückt. In Fig. 4b wird dieser nach links gedrückt. In diesem Ausführungsbeispiel ist die zweite Auslenkkontur 36 derart angeordnet, dass der zweite Auslösevorsprung 17 nach rechts gedrückt wird. Dadurch erfolgt eine Rollbewegung des Windkanalmodells 3.

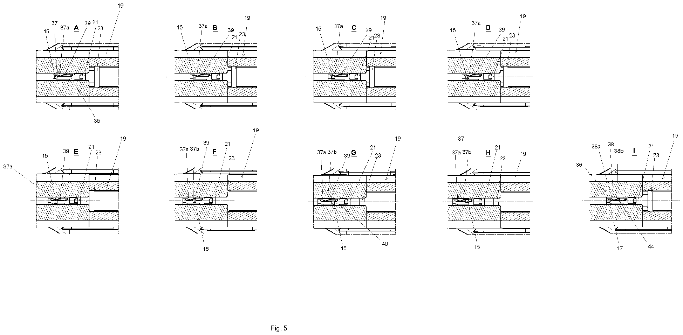

In den Figuren Fign. 5A-H sind die einzelnen Abschnitte der Bewegung schematisch dargestellt, wobei eine Ansicht von oben auf die erste Auslenkkontur 35 gezeigt ist. In Fig. 5I ist die zweiten Auslenkkontur 36 des Windkanalmodells 3 in nicht ausgelenkter Position dargestellt (Ansicht von unten).

In Grundposition (Fig. 5A) ist das Windkanalmodell 3 in nicht ausgelenkter Position über den beidseitigen Kontakt des ersten und zweiten Auslösevorsprungs 15,17 mit der sich in der Halteposition befindlichen Auslenkeinrichtung 13 fixiert. Durch Verschieben der Antriebsstange 25 wird das Windkanalmodell 3 über den Kontakt des ersten und zweiten Auslösevorsprungs 15,17 mit der ersten Auslenkkontur 35 und der zweiten Auslenkkontur 36 (vgl. Fig. 5I) aus der Grundposition ausgelenkt (Fign. 5B-E). Im Punkt maximaler Auslenkung gleiten der erste und zweite Auslösevorsprung 15,17 auf den Stufenvorsprung 39 bzw. den weiteren Stufenvorsprung 44 der zweite Hülse 23. Das Windkanalmodell 3 ist in ausgelenkter Position fixiert (Fig. 5F).

Wie aus Fig. 5I ersichtlich ist, weist die zweiten Auslenkkontur 36 eine weitere Rampenkontur 38 mit einer ersten und einer zweiten Rampe 38a, 38b auf., die sich in der axialen Richtung erstreckt. Die Funktion der weiteren Rampenkontur 38 erfolgt analog zu der der Rampenkontur 37 der erste Auslenkkontur 35.

Wird die Antriebsstange 25 weiter verschoben, gleiten der erste und zweite Auslösevorsprung 15,17 auf dem Stufenvorsprung 39 bzw. dem weiteren Stufenvorsprung 44 entlang. Die Auslösung des Windkanalmodells 3 erfolgt, wenn der erste und zweite Auslösevorsprung 15,17 über die Stufe des Stufenvorsprungs 39 bzw. die Stufe des weiteren Stufenvorsprungs 44 rutschen (Fig. 5G).

Die Antriebsstange 25 wird noch weiter verschoben, so dass das Windkanalmodell 3 frei rotieren und eine dynamische Messung erfolgen kann.

Der Rückführvorgang des Windkanalmodels 3 erfolgt analog wie in Bezug auf die Nickbewegung zu Fign. 3G-K beschrieben.

Grundsätzlich kann die erfindungsgemäße Windkanaltestvorrichtung 1 auch eine Gierbewegung ausführen, bei der die Auslenkrichtung eine tangentiale Richtung ist. Dabei wird die Auslenkeinrichtung des zweiten Ausführungsbeispiels der Erfindung (vgl. Fign. 4a und 4b) dahingehend modifiziert, dass die zweite Auslenkkontur 36 den zweiten Auslösevorsprung 17 in die gleiche Richtung verschiebt wie die erste Auslenkkontur 35 den ersten Auslösevorsprung 15, so dass die Auslenkbewegung in die tangentiale Richtung erfolgt. Dabei wird eine Federeinrichtung 11 mit gekreuzten Blattfedern gemäß dem ersten Ausführungsbeispiel in geeigneter Ausrichtung eingesetzt.

### Bezugszeichenliste

- 1: Windkanaltestvorrichtung
- 3: Windkanalmodell
- 3a: Anströmseite
- 5: Auslösevorrichtung
- 7: Anschlussaussparung
- 9: Anschlussvorrichtung
- 11: Federeinrichtung
- 13: Auslenkeinrichtung
- 15: erster Auslösevorsprung,
- 17: zweiter Auslösevorsprung
- 19: Hauptkörper
- 21: erste Hülse
- 23: zweite Hülse
- 25: Antriebsstange
- 27: Antriebsmotor
- 29: Getriebe
- 30: Lager
- 31: Spindel
- 33: Mutter
- 35: erste Auslenkkontur
- 36: zweite Auslenkkontur
- 37: Rampenkontur
- 37a: erste Rampe
- 37b: zweite Rampe
- 38: weitere Rampenkontur
- 38a: erste Rampe der weiteren Rampenkontur
- 38b: zweite Rampe der weiteren Rampenkontur
- 39: Stufenvorsprung
- 40: Freiraum
- 41: Führungskontur
- 42: Freigabebereich
- 43: Zwischenfeder
- 44: weiterer Stufenvorsprung
- S: Schwerpunkt

## Patentansprüche

1. Windkanaltestvorrichtung (1) zur Ermittlung von dynamischen Beiwerten an einem Windkanalmodell,
mit einem Windkanalmodell (3) und mit einer Auslösevorrichtung (5),
wobei das Windkanalmodell (3) auf einer von einer Anströmseite (3a) abgewandten Seite eine Anschlussaussparung (7) aufweist, in der eine Anschlussvorrichtung (9) für die Auslösevorrichtung (5) angeordnet ist, wobei die Auslösevorrichtung (5) eine Federeinrichtung (11) aufweist, über die die Auslösevorrichtung (5) mit der Anschlussvorrichtung (9) verbunden ist,
wobei das Windkanalmodell (3) einen ersten und einen zweiten Auslösevorsprung (15, 17) aufweist, die in der Anschlussaussparung (7) angeordnet sind, wobei die Auslösevorrichtung (5) mit einer Auslenkeinrichtung (13) an dem ersten und dem zweiten Auslösevorsprung (15,17) angreift,
wobei die Auslenkeinrichtung (13) relativ zu dem Windkanalmodell (3) aus einer Halteposition, in der das Windkanalmodell (3) mittels des ersten und des zweiten Auslösevorsprungs (15, 17) von der Auslenkeinrichtung (13) in einer Grundposition des Windkanalmodells (3) gehalten wird, in eine Auslöseposition bewegbar ist, wobei bei der Bewegung der Auslenkeinrichtung (13) eine erste Auslenkkontur (35) der Auslenkeinrichtung (13) gegen den ersten Auslösevorsprung (15) drückt und das Windkanalmodell (3) in eine Auslenkrichtung und entgegen einer Federkraft der Federeinrichtung (11) in eine Auslenkposition des Windkanalmodells (3) bewegt, wobei die erste Auslenkkontur (35) eine Stufe bildet und wobei in der Auslenkposition des Windkanalmodells (3) der erste Auslösevorsprung (15) auf der Stufe angeordnet ist,
wobei eine Bewegung der Auslenkeinrichtung (13) relativ zu dem Windkanalmodell (3) über die Auslöseposition hinaus, der erste Auslösevorsprung (15) sich über die Stufe bewegt und das Windkanalmodell (3) zum Schwingen um die Federeinrichtung (11) freigibt.

2. Windkanaltestvorrichtung nach Anspruch 1, **dadurch gekennzeichnet, dass** die Auslösevorrichtung (5) einen langgestreckten Hauptkörper (19) aufweist, der sich in die Anschlussaussparung (7) erstreckt und dessen erstes Ende mit der Federeinrichtung (11) verbunden ist, wobei die Auslenkeinrichtung (13) relativ zu dem langgestreckten Hauptkörper (19) in axialer Richtung des langgestreckten Hauptkörpers (19) bewegbar ist.

3. Windkanaltestvorrichtung nach Anspruch 2, **dadurch gekennzeichnet, dass** der langgestreckte Hauptkörper (19) als Hohlzylinder ausgebildet ist, wobei die Auslenkeinrichtung (13) als ein ein- oder mehrteiliger Hülsenkörper ausgebildet ist, der über eine durch den Hohlzylinder geführte Antriebsstange (25) bewegbar ist.

4. Windkanaltestvorrichtung nach Anspruch 3, **dadurch gekennzeichnet, dass** der Hülsenkörper aus einer ersten und einer zweiten Hülse (21, 23) besteht, wobei die erste und die zweite Hülse (21, 23) relativ zueinander bewegbar sind, wobei die erste Hülse (21) eine Rampenkontur (37) mit einer ersten und einer zweiten Rampe (37a, 37b), die sich in der axialen Richtung erstreckt, als Teil der ersten Auslenkkontur (35) aufweist und die zweite Hülse (23) einen Stufenvorsprung (39), der die Stufe bildet, als Teil der ersten Auslenkkontur (35) aufweist, wobei die Rampenkontur (37) einen an den Stufenvorsprung (39) angepasste Erstreckung in die Auslenkrichtung aufweist und wobei die Rampenkontur (37) und der Stufenvorsprung (39) in einer Richtung quer zu der axialen Richtung nebeneinander angeordnet sind, wobei bei der Bewegung der Auslenkeinrichtung (13) aus der Halteposition in die Auslöseposition die erste Rampe (37a) den ersten Auslösevorsprung (15) auf den Stufenvorsprung (39) führt.

5. Windkanaltestvorrichtung nach Anspruch 4, **dadurch gekennzeichnet, dass** in der Auslenkposition des Windkanalmodells der zweite Auslösevorsprung (17) von der Auslenkeinrichtung (13) beabstandet ist.

6. Windkanaltestvorrichtung nach Anspruch 5, **dadurch gekennzeichnet, dass** die Auslenkrichtung die vertikale Richtung ist und die Rampenkontur (37) und der Stufenvorsprung (39) in der Richtung quer zu der axialen Richtung einen Abstand zueinander aufweisen, der geringer ist als eine Breite des ersten Auslösevorsprungs (15) in dieser Richtung, wobei die erste und die zweite Hülse (21, 23) in der Halteposition der Auslenkeinrichtung (13) in einer ersten Position zueinander angeordnet sind, in der der Stufenvorsprung (39) in der Richtung quer zu der axialen Richtung die zweite Rampe (37b) zumindest teilweise überdeckt und wobei die zweite Hülse (23) in Richtung zu der Federeinrichtung (11) relativ zu der ersten Hülse in eine zweite Position verschiebbar ist, in der der Stufenvorsprung (39) in der Richtung quer zu der axialen Richtung die zweite Rampe (37b) nicht überdeckt.

7. Windkanaltestvorrichtung nach einem der vorangegangenen Ansprüche, **dadurch gekennzeichnet, dass** die Auslenkeinrichtung (13) eine Führungskontur (41) aufweist, die bei der Bewegung der Auslenkeinrichtung (13) in Richtung zur der Auslöseposition den zweiten Auslösevorsprung (17) führt, wobei die Führungskontur (41) in der Auslöseposition einen Freigabebereich (42) bildet, der einen vorgegebenen Abstand zu dem zweiten Auslösevorsprung (17) aufweist .

8. Windkanaltestvorrichtung nach Anspruch 4, **dadurch gekennzeichnet, dass** bei der Bewegung der Auslenkeinrichtung (13) eine zweite Auslenkkontur (36) der Auslenkeinrichtung (13) gegen den zweiten Auslösevorsprung (17) drückt und das Windkanalmodell (3) in die Auslenkrichtung bewegt, wobei die zweite Auslenkkontur (36) eine Stufe bildet und wobei in der Auslenkposition des Windkanalmodells (3) der zweite Auslösevorsprung (17) auf der Stufe der zweiten Auslenkkontur (36) angeordnet ist, wobei bei der Bewegung der Auslenkeinrichtung (13) relativ zu dem Windkanalmodell (3) über die Auslöseposition hinaus, der zweite Auslösevorsprung (17) sich über die Stufe der zweiten Auslenkkontur (36) bewegt und das Windkanalmodell (3) zum Schwingen um die Federeinrichtung (11) freigibt.

9. Windkanaltestvorrichtung nach Anspruch 8, **dadurch gekennzeichnet, dass** die erste Hülse (21) eine weitere Rampenkontur (38) mit einer ersten und einer zweiten Rampe (38a, 38b), die sich in der axialen Richtung erstreckt, als Teil der zweiten Auslenkkontur (36) aufweist und die zweite Hülse (23) einen weiteren Stufenvorsprung (44), der die Stufe der zweiten Auslenckontur (36) bildet, als Teil der zweiten Auslenkkontur (36) aufweist, wobei die weitere Rampenkontur (38) eine an den weiteren Stufenvorsprung (44) angepasste Erstreckung in der Auslenkrichtung aufweist und wobei die weitere Rampenkontur (38) und der weitere Stufenvorsprung (44) in einer Richtung quer zu der axialen Richtung nebeneinander angeordnet sind, wobei bei der Bewegung der Auslenkeinrichtung (13) aus der Halteposition in die Auslöseposition die erste Rampe (38a) der weiteren Rampenkontur (38) den zweiten Auslösevorsprung (17) auf den weitere Stufenvorsprung (44) führt.

10. Windkanaltestvorrichtung nach Anspruch 9, **dadurch gekennzeichnet, dass** die Auslenkrichtung die Umfangsrichtung oder die tangentiale Richtung ist, wobei die erste und die zweite Hülse (21, 23) in der Halteposition der Auslenkeinrichtung (13) in einer ersten Position zueinander angeordnet sind, in der der Stufenvorsprung (39) in Auslenkrichtung die zweite Rampe (37b) zumindest teilweise überdeckt und wobei die zweite Hülse (23) in Richtung zu der Federeinrichtung relativ zu der ersten Hülse in eine zweite Position verschiebbar ist, in der der Stufenvorsprung (39) in Auslenkrichtung die zweite Rampe (37b) nicht überdeckt.

11. Windkanaltestvorrichtung nach Anspruch 10, **dadurch gekennzeichnet, dass** in der Halteposition der Auslenkeinrichtung (13) der weitere Stufenvorsprung (44) in Auslenkrichtung die zweite Rampe (38b) der weiteren Rampenkontur (38) zumindest teilweise überdeckt und wobei in der zweiten Position der weitere Stufenvorsprung (44) in Auslenkrichtung die zweite Rampe (38b) der weiteren Rampenkontur (38) nicht überdeckt.

12. Windkanaltestvorrichtung nach einem der vorangegangenen Ansprüche, **dadurch gekennzeichnet, dass** mindestens eine Zwischenfeder (43) zwischen der ersten Hülse (21) und der zweiten Hülse (23) angeordnet ist, wobei die Verschiebung der zweiten Hülse (23) relativ zu der ersten Hülse aus der ersten Position in die zweite Position entgegen einer Federkraft der mindestens einen Zwischenfeder (43) erfolgt.

13. Windkanaltestvorrichtung nach einem der vorangegangenen Ansprüche, **dadurch gekennzeichnet, dass** nach dem Schwingen des Windkanalmodells (3) bei der Rückführung der Auslenkeinrichtung (13) in die Halteposition der erste Auslösevorsprung (15) gegen den Stufenvorsprung (39) drückt, und die zweite Hülse (23) aus der ersten Position in die zweite Position schiebt, wobei die zweite Rampe (37b) freigegeben wird und die zweite Rampe (37b) den ersten Auslösevorsprung (15) auf den Stufenvorsprung (39) führt .

14. Windkanaltestvorrichtung nach einem der vorangegangenen Ansprüche, **dadurch gekennzeichnet, dass** nach dem Schwingen des Windkanalmodells (3) bei der Rückführung der Auslenkeinrichtung (13) in die Halteposition der zweite Auslösevorsprung (17) gegen den weiteren Stufenvorsprung (44) drückt, und die zweite Hülse (23) aus der ersten Position in die zweite Position schiebt, wobei die zweite Rampe (38b) der weiteren Rampenkontur (38) freigegeben wird und die zweite Rampe (38b) der weiteren Rampenkontur (38) den zweiten Auslösevorsprung (17) auf den weiteren Stufenvorsprung (44) führt .
